# EUROPEAN PATENT APPLICATION

(11) **EP 1 872 992 A1**
(43) Date of publication of application: **02.01.2008**
(21) Application number: 07252621.3
(22) Date of filing: 28.06.2007
(51) Int. Cl.: B60J 10/00, B60J 10/08

(54) **Weather strip**

(30) Priority: 30.06.2006 JP 2006181544
(71) Applicant: Tokai Kogyo Co. Ltd., Obu-city Aichi (JP)
(72) Inventor: Ochiai, Takuya c/o Tokai Kogyo Co., Ltd., Obu-city, Aichi (JP)
(74) Representative: Senior, Alan Murray

(57) **Abstract**

A weather strip (10) seals a gap between a vehicle body panel (1) including a flange (5) disposed at a peripheral edge of a door opening and a door (8). The weather strip includes an attaching portion (20), a tubular hollow sealing portion (40) and a project portion (50). The attaching portion (20) is attachable to the flange (5) while gripping the flange. The tubular hollow sealing portion (40) projects from the attaching portion (20) generally in the same direction as a projecting direction of the flange and includes a peripheral wall (42) having a generally annular cross-sectional shape. The project portion (50) projects from the vicinity of a top portion (45) of the peripheral wall and is located at a side of the flange from the top portion and includes: an inclined portion (50a) that extends along a tangential direction of the peripheral wall; and a projecting end portion (50b) that projects to exterior side with respect to the extension line (L) of the flange.

## Description

### BACKGROUND OF THE INVENTION

### 1. Field of the Invention

This invention relates to a weather strip formed to be attached to a flange on a peripheral edge of a door opening of a vehicle body panel.

### 2. Description of the Related Art

A weather strip is fitted into a flange at a peripheral edge of a door opening of a vehicle body panel corresponding to a door (back door) at the rear of a vehicle. The weather strip is formed into a long shape and includes: an attaching portion that has a generally U-shaped cross-sectional shape and grips the flange from both sides thereof; and a tubular hollow sealing portion that contacts the door when the door is closed, and is elastically deformed to seal between the door and the vehicle body panel by its elastic repulsive force.

JP-A-8-324252 discloses a weather strip which includes a lip inclined in its cross-sectional shape and formed at that portion of a peripheral wall of a tubular hollow sealing portion disposed in the vicinity of a top portion of this peripheral wall, and disposed exteriorly of an extension line of a flange, and projecting beyond the top portion of the peripheral wall in a direction of projecting of the flange.

Incidentally, a door (back door) at the rear of a vehicle is mounted on a roof-side upper edge portion or a pillar-side side edge portion of a vehicle body by a hinge mechanism so as to be pivotally turned about a hinge between open and closed positions.

Therefore, for example, in the case where the door is mounted by the hinge mechanism on the roof-side upper edge portion of the vehicle body so as to be opened and closed, and when the door is closed, the direction of approach of the door relative to the tubular hollow sealing portion of the weather strip as disclosed in JP-A-8-324252 is less different at an upper portion and a lower portion of the weather strip which are disposed generally parallel to an axis of the hinge of the hinge mechanism of the door. The tubular hollow sealing portion at these upper and lower portions, while contacted with a back side surface of the door generally in the same posture, is elastically deformed into a flatter shape than the original shape thereof over the entire length.

However, at those portions of the weather strip disposed in intersecting relation to the axis of the hinge of the hinge mechanism, that is, corner portions and opposite (left and right) side portions other than the upper and lower portions, the angle of approach of the door relative to the tubular hollow sealing portion is varied depending on the distance from the hinge. Therefore, the deformed condition of the tubular hollow sealing portion contacted with the back side surface of the back door is partially varied in the longitudinal direction. Therefore, it is difficult to maintain a sealing effect uniformly along the longitudinal direction. And besides, the tubular hollow sealing portion, in some cases, is accidentally deformed in an inclined manner, which has invited a problem that water or others may intrude through this portion, thus causing defective sealing.

Particularly in the weather strip as disclosed in JP-A-8-324252, when the door is closed, the back side surface of this door is first brought into contact with the lip to elastically deform this lip, and then is brought into contact with the peripheral wall of the hollow portion to elastically deform this peripheral wall. With this structural feature, relative position shifting between the door back side surface and the contact portions of the lip and the tubular hollow sealing portion is more liable to occur, and in some cases these portions fail to be elastically deformed in a uniform posture, so that defective sealing is liable to occur.

With the above problems in view, object of this invention is to provide a weather strip in which when a door is closed, a hollow portion of the weather strip is elastically deformed stably over an entire length thereof, thereby securing a good sealing performance.

According to a first aspect of the invention, there is provided a weather strip that seals a gap between a vehicle body panel including a flange disposed at a peripheral edge of a door opening thereof and a door that is movable between an opened state and a closed state preferably along a locus intersecting an extension line of a projecting direction of the flange, when the door is the closed state. The weather strip includes an attaching portion, a tubular hollow sealing portion, and a project portion. The attaching portion has a generally U-shaped cross-sectional shape and includes: two side walls including interior and exterior side walls that face with each other with a predetermined distance therebetween and are attachable to the flange while gripping the flange from opposite sides thereof; and a connecting wall that integrally connects the two side walls at one ends thereof. The tubular hollow sealing portion projects from a surface of the connecting wall generally in the same direction as the projecting direction of the flange and includes a peripheral wall having a generally annular cross-sectional shape. The project portion projects from the vicinity of a top portion of the peripheral wall and is located at a side of the flange from the top portion and includes: an inclined portion that extends along a tangential direction of an outer surface of the peripheral wall; and a projecting end portion that projects to exterior side with respect to the extension line of the extending direction of the flange. When the door is of the type that moves between open and closed states along a locus intersecting the extension line of the projecting direction of the flange, and when such door is closed a back side surface of the door contacts with the top portion of the peripheral wall, the vicinity of the top portion of the peripheral wall and the inclined portion of the project portion, in order, whereby an area of a contact portion of the peripheral wall with the back side surface of the door increases and an elastic repulsive force of the peripheral wall increases so that the peripheral wall is elastically deformed toward the flange while increasing a frictional force between the back side surface of the door and the contact portion of the peripheral wall. Thereafter, the peripheral wall is elastically deformed into a generally flatter shape than an original shape thereof while increasing the elastic repulsive force, and the contact portion of the peripheral wall is displaced along with the locus of movement of the back side surface of the door while the back side surface of the door and the contact portion of the peripheral wall are prevented from shifting relative to each other by the frictional force.

According to the weather strip configured in this manner, when the door is closed, the back side surface of the door is first brought into contact with the top portion of the peripheral wall of the tubular hollow sealing portion, and then into contact with the portion of the peripheral wall disposed in the vicinity of the top portion, and then into contact with the inclined portion of the project portion, and therefore the area of contact portion of the peripheral wall with the back side surface of the door gradually increases, and also the elastic repulsive force of the peripheral wall gradually increases. As a result, the peripheral wall is elastically deformed toward the flange while increasing the frictional force between the back side surface of the door and the contact portion of the peripheral wall.

Thereafter, the peripheral wall is elastically deformed into a generally flatter shape than an original shape thereof while further increasing the elastic repulsive force, and also the contact portion of the peripheral wall is displaced along with the locus of movement of the back side surface of the door while the back side surface and the contact portion of the peripheral wall are prevented from shifting relative to each other by the increasing frictional force.

Therefore, any portion of the tubular hollow sealing portion of the weather strip (regardless of whether it is a portion parallel to an axis of a hinge of a hinge mechanism of the door or a portion intersecting the hinge axis) can be elastically deformed stably over the entire length, thereby securing a good sealing performance.

The attaching portion and the tubular hollow sealing portion may have uniform cross-sections in a longitudinal direction thereof, respectively.

According to the whether strip configured in this manner, in addition to the effect according to the first aspect of the invention, the attaching portion and the tubular hollow sealing portion each having the uniform cross-sections and that can be easily formed by extrusion, and therefore the weather strip can be provided at a low cost.

The projecting end portion of the project portion and the outer surface of the peripheral wall may define a concave groove having a generally V-shape and an acute angle. According to the weather strip configured in this manner, water, intruding between the vehicle body panel and the door, flows into the concave groove having the generally V-shape and the acute-angle in cross-sectional shape, and the flowing-down of the water is guided by this groove, thereby preventing an undesirable situation in which the water intrudes past the groove into the interior of the vehicle.

The peripheral wall may include an interior peripheral wall and an exterior peripheral wall with a root portion of the project portion as a boundary therebetween, and a wall thickness of the interior peripheral wall is larger than a thickness of the exterior peripheral wall.

According to the weather strip configured in this manner, of the invention, when the peripheral wall of the hollow portion is elastically deformed into the flatter shape than the original shape thereof to achieve the sealed condition, the interior peripheral wall exerts a larger elastic repulsive force than the exterior peripheral wall because the interior peripheral wall is thicker than the exterior peripheral wall, and therefore the sealing performance can be efficiently enhanced by the thicker of the interior peripheral wall.

The peripheral wall may include a concave portion on an inner peripheral surface thereof opposite to a position where the project portion is formed.

According to the whether strip configured in this manner , a portion of the peripheral wall at which the project portion is formed is prevented from becoming excessively larger in wall thickness than the other remaining portion of the peripheral wall due to the formation of the concave portion on the inner peripheral surface of the peripheral wall opposite to a position where the project portion is formed. Therefore, this prevents a situation in which the peripheral wall is prevented by the project portion from being suitably elastically deformed.

The tubular hollow sealing portion may be made of a sponge rubber and the tubular hollow sealing portion may be more easy to be elastically deformed than the attaching portion. The attaching portion may be made of rubber material having a higher relative density than that of the sponge rubber.

Each of the two side walls may include at least one gripping lip at an inner surface thereof. Each gripping lip may project from the inner surface in a direction away from an opening of the attaching portion. The interior side wall may be provided with an interior lip that has a generally hook-shaped cross-sectional shape and covers an end edge portion of an interior trim body attached to an inner panel of the vehicle body panel.

The exterior side wall may be provided with an exterior lip that abuts against an outer surface of an outer panel continuous with a bottom wall of the flange.

The attaching portion may include a core member embedded therein. The core member may be made of material having higher rigidity than other part of the attaching portion.

The connecting wall may be provided with a sealing material made of at least one of either paste-like sealing compound and foamed rubber material. The sealing material may close contact with a distal end of the flange and seals a gap between the connecting wall and the flange when the attaching portion is attached to the flange.

The weather strip may be formed by extrusion. The attaching portion and the tubular hollow sealing portion may be bonded integrally by co-extrusion and vulcanizing.

The door may be pivotable about a hinge provided to the vehicle body panel at a roof-side upper edge portion thereof.

The weather strip may further include end portions at longitudinal ends thereof. The weather strip may have a generally annular shape while the longitudinal end portions are connected each other.

### BRIEF DESCRIPTION OF THE DRAWINGS

In the accompanying drawings:
Fig. 1 is a side view showing a condition in which a weather strip according to a first embodiment of the present invention is attached to a flange on a peripheral edge of a door opening in a vehicle body panel corresponding to a back door of a vehicle;
Fig. 2 is a view as seen in a direction of arrow II of Fig. 1, showing the condition in which the weather strip is attached to the flange on the peripheral edge of the door opening in the vehicle body panel;
Fig. 3 is a view as seen in a direction of arrow III of Fig. 1, showing the condition in which the weather strip is attached to the flange on the peripheral edge of the door opening in the vehicle body panel;
Fig. 4 is a cross-sectional view showing a portion of the weather strip;
Fig. 5 is a cross-sectional view taken along the line V-V of Fig. 3, showing an upper portion of the weather strip;
Fig. 6 is a cross-sectional view taken along the line VI-VI of Fig. 3, showing an upper corner portion of the weather strip;
Fig. 7 is a cross-sectional view taken along the line VII-VII of Fig. 3, showing an upper portion of a side portion of the weather strip; and
Fig. 8 is a cross-sectional view taken along the line VIII-VIII of Fig. 3, showing a lower portion of the weather strip.

### DETAILED DESCRIPTION

### First Embodiment

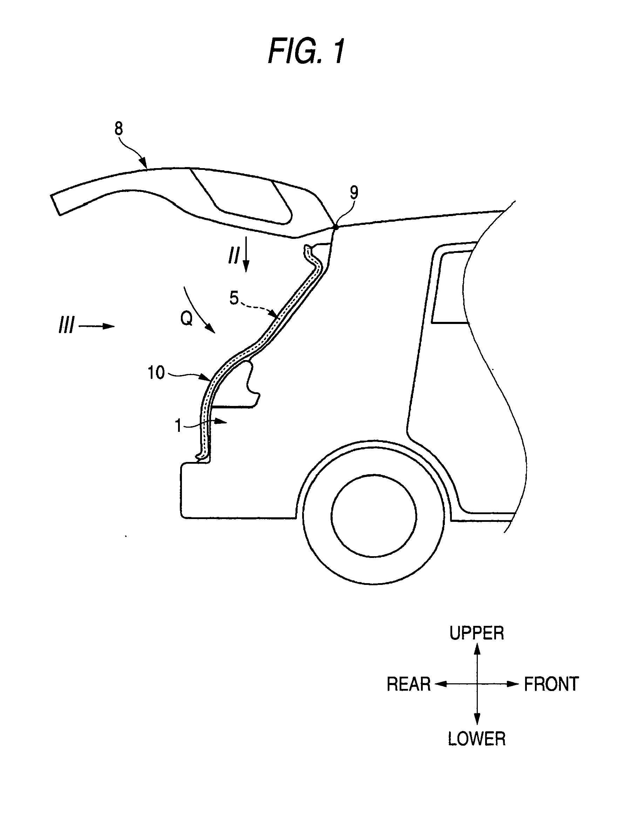

A first embodiment of the invention will now be described with reference to Figs. 1 to 8.

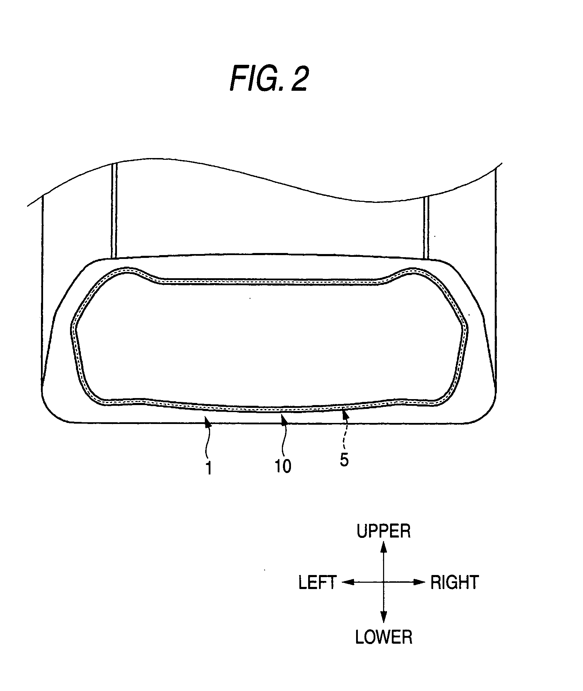

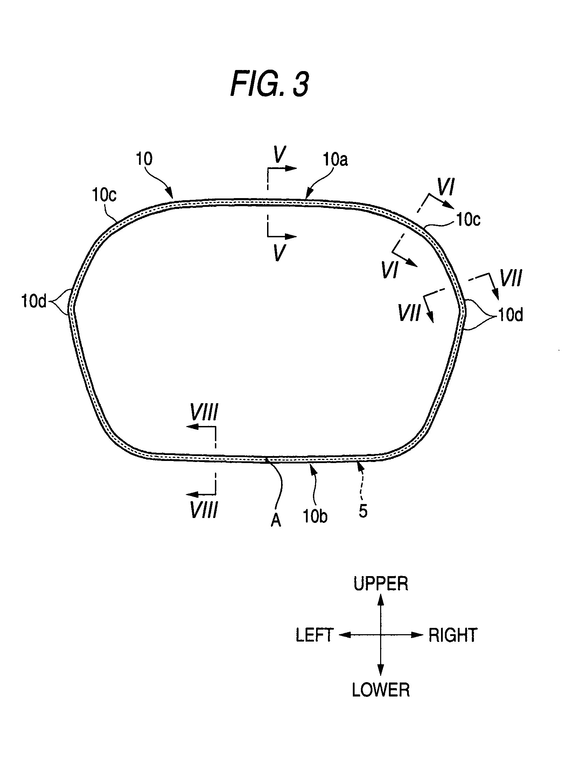

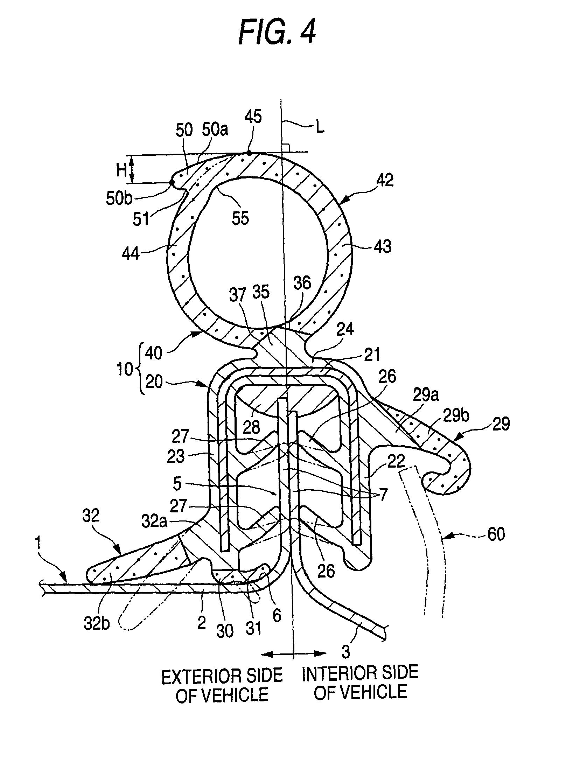

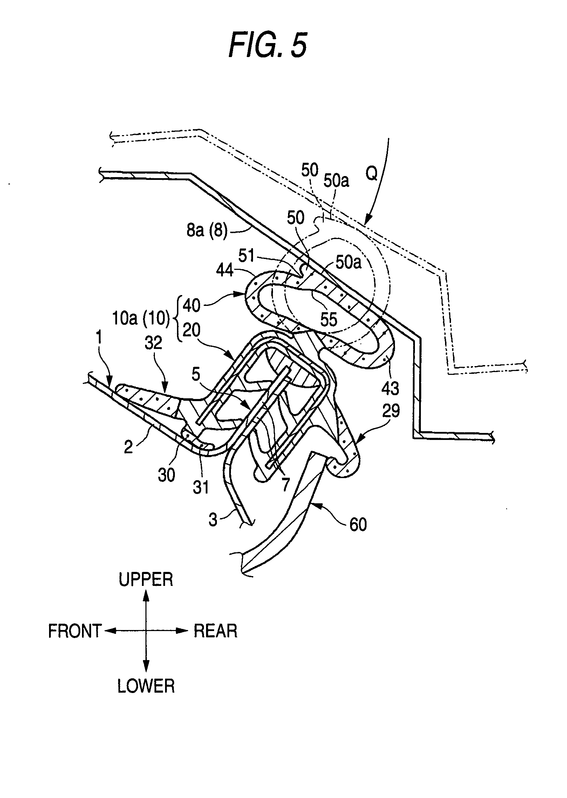

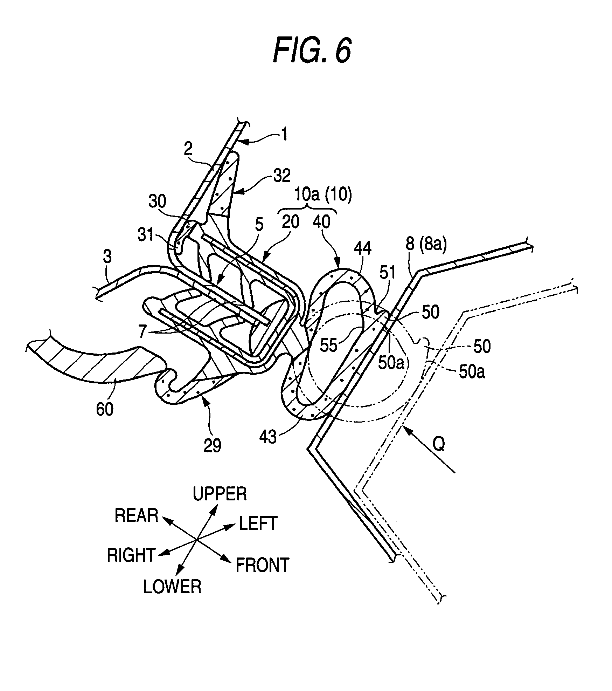

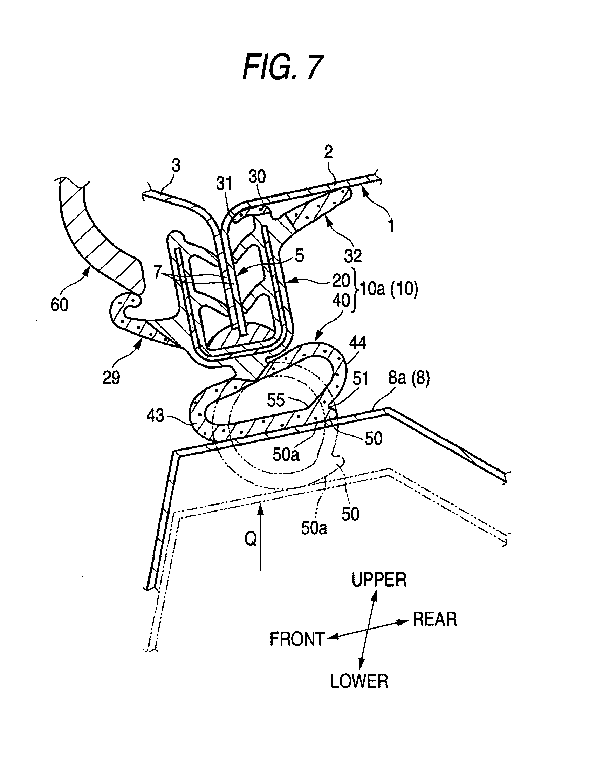

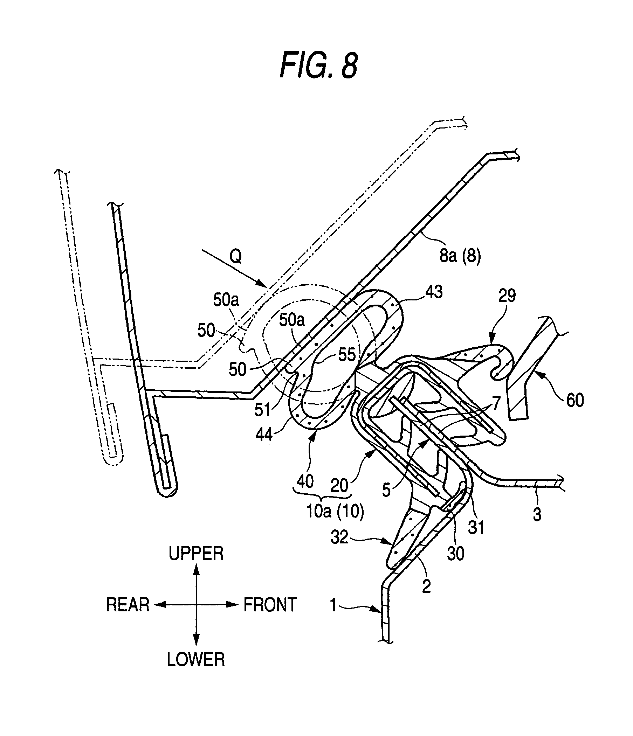

Fig. 1 is a side-elevational view showing a condition in which the first embodiment of a weather strip of the invention is attached to a flange on a peripheral edge of a door opening in a vehicle body panel corresponding to a back door of a vehicle. Fig. 2 is a view as seen in a direction of arrow II of Fig. 1, showing the condition in which the weather strip is attached to the flange on the peripheral edge of the door opening in the vehicle body panel. Fig. 3 is a view as seen in a direction of arrow III of Fig. 1, showing the condition in which the weather strip is attached to the flange on the peripheral edge of the door opening in the vehicle body panel. Fig. 4 is a cross-sectional view showing a portion of the weather strip. Fig. 5 is a cross-sectional view taken along the line V-V of Fig. 3, showing an upper portion of the weather strip. Fig. 6 is a cross-sectional view taken along the line VI-VI of Fig. 3, showing an upper corner portion of the weather strip. Fig. 7 is a cross-sectional view taken along the line VII-VII of Fig. 3, showing an upper portion of a side portion of the weather strip. Fig. 8 is a cross-sectional view taken along the line VIII-VIII of Fig. 3, showing a lower portion of the weather strip.

As shown in Figs. 1 to 4, the weather strip 10 is attached to the flange 5 formed on and along the peripheral edge of the door opening in the vehicle body panel 1 corresponding to the back door 8 of the vehicle, and the weather strip 10 extends along a longitudinal direction of the flange 5 so as to form a seal between the door peripheral edge of the vehicle body panel 1 and the back door 8. As shown in Fig. 3, the weather strip 10 includes end portions A at longitudinal ends thereof and the weather strip 10 is connected at the both end portions A each other and has a generally annular shape.

As shown in Fig. 4, the flange 5 of the vehicle body panel 1 is formed by joining an end edge portion of an outer panel 2 and an end edge portion of an inner panel 3 together by spot welding. The flange 5 has a projecting flange portion 7 at its distal end portion, and a bent bottom wall 6 at a root portion of the outer penal 2.

The back door 8 is mounted on a roof-side upper edge portion (as shown in Fig. 1) or a pillar-side side edge portion of the vehicle body panel 1 so as to be pivotally turned about a hinge 9 of a hinge mechanism between open and closed positions . In this first embodiment, the back door 8 is mounted on the roof-side upper edge portion of the vehicle body panel 1 so as to be turned about the hinge 9 of the hinge mechanism between the open and closed positions.

As shown in Fig. 4, the weather strip 10 includes an attaching portion 20 and a tubular hollow sealing portion 40 which are formed integrally with each other, and this weather strip 10 is formed into a long shape by extruding a rubber material (including EPDM as a main component) or a thermoplastic elastomer material, and has a uniform cross-sectional shape over an entire length thereof. The attaching portion 20 includes a pair of opposed interior and exterior side walls 22 and 23 spaced a predetermined distance from each other, a connecting wall 24 integrally interconnecting the two side walls 22 and 23 at their one ends, and an opening continuously extending in a longitudinal direction at the other ends of the two side walls 22 and 23, the attaching portion 20 having a generally U-shaped cross-sectional shape.

As shown in Fig. 4, each of the interior and exterior side walls 22 and 23 of the attaching portion 20 includes at least one (two in this embodiment shown in Fig. 4) gripping lip 26, 27 on an inner surface thereof, and projects in a direction away from the opening of the attaching portion 20.

Simultaneously when forming the weather strip by extrusion, a core member 21 of a generally U-shaped cross-sectional shape is embedded in generally median portions of the two side walls 22 and 23 and connecting wall 24 of the attaching portion 20, and this core member is formed by punching a rigid metal sheet (such for example as a steel strip) having higher rigidity than other part of the attaching portion 20 into a fish skeleton-like shape. With this construction, the rigidity and a flange-gripping force of the attaching portion 20 are enhanced.

As shown in Figs. 4 and 5, an interior lip 29 is formed as generally hook-shape in cross-sectional shape and projects from the outer surface of the interior side wall 22 of the attaching portion 20 so as to cover an end edge portion of an interior trim body 60.

A panel touch portion 30 for abutting against the bottom wall 6 of the flange 5, as well as a distal end lip 31 for being elastically deformed into tight contact with the bottom wall 6, is formed at the opening-side end of the exterior side wall 23. Further, an exterior lip portion 32 for being elastically deformed into close contact with (abuts against) an outer surface of the outer panel 2 continuous with the bottom wall 6 of the flange 5 is formed on and projects from an outer surface of the end portion of the exterior side wall 23.

As shown in Fig. 4, the tubular hollow sealing portion 40 projects from an outer surface of the connecting wall 24 in the same direction as the direction of projecting of the flange 5, and is formed by a peripheral wall 42 of a generally annular (annular or C-shaped) cross-sectional shape.

In this first embodiment, a neck portion 35 is formed on and projects from a central portion in width direction of the outer surface of the connecting wall 24, and extends continuously in the longitudinal direction of the connecting wall 24. A projecting end of this neck portion 25 is formed into a generally mountain-shaped (i.e., triangular) cross-sectional shape. Two inclined surfaces of the neck portion 35 serve respectively as interior and exterior bond surfaces 36 and 37, and both end surfaces of the peripheral wall 42 of the generally C-shaped cross-sectional shape are integrally bonded to these bond surfaces 36 and 37, respectively.

As shown in Fig. 4, a project portion 50 is formed on that portion of the peripheral wall 42 disposed in the vicinity of a top portion 45 thereof, and this project portion 50 includes an inclined portion 50a extending along a tangential direction of the outer peripheral surface of the peripheral wall 42, and a projecting end 50b disposed exteriorly of an extension line L of the flange 5 and spaced a distance H from the top portion 45 of the peripheral wall 42 toward the flange 5 in the direction of projecting of the flange 5.

In this first embodiment, a concave groove 51 of a generally V-shaped acute-angled cross-section is formed between the distal end of the project portion 50 and the outer peripheral surface of the peripheral wall 42 as shown in Fig. 4.

The peripheral wall 42 includes an interior peripheral wall 43 and an exterior peripheral wall 44, with a root portion of the inclined portion 50a of the project portion 50 lying at the boundary therebetween, and a wall thickness of the interior peripheral wall 43 is larger than a wall thickness of the exterior peripheral wall 44.

A groove-like concave portion 55 is formed at that portion of the inner peripheral surface of the peripheral wall 42 corresponding to the project portion 50, and extends in the longitudinal direction. Therefore, that portion of the peripheral wall 42 at which the project portion 50 is formed is not excessively larger in wall thickness than the other remaining portion of the peripheral wall 42, and also this localized portion is not excessively larger in elastic repelling force.

In this first embodiment, the two side walls 22 and 23 and the connecting wall 24 (which jointly form the attaching portion 20), root portions 29a and 32a of the interior and exterior lips 29 and 32, and the neck portion 35 of the tubular hollow sealing portion 40 are formed by extruding a rubber material (having higher relative density than that of the sponge rubber ) comprises EPDM as a main component. Simultaneously with the extrusion of these portions, lip portions 29b and 32b of the interior and exterior lips 29 and 32, the panel touch portion 30, the distal end lip 31 and the peripheral wall 42 of the tubular hollow sealing portion 40 are extruded integrally with the above-mentioned portions, using an unvulcanized foamed rubber material (comprising EPDM as a main component). Thereafter the extruded product is vulcanized (subjected to a cross-linking reaction) by heat to form the long weather strip 10. That is, the attaching portion 20 and the tubular hollow sealing portion 40 are bonded integrally by co-extrusion and vulcanizing.

Namely, the lip portions 29b and 32b of the interior and exterior lips 29 and 32, the panel touch portion 30, the distal end lip 31 and the peripheral wall 42 of the tubular hollow sealing portion 40 are made of the sponge rubber which is easier to be elastically deformed than the attaching portion 20. The lip portions 29b and 32b are vulcanization-bonded integrally to the root portions 29a and 32a of the interior and exterior lips 29 and 32, respectively, and similarly the peripheral wall 42 is vulcanization-bonded integrally to the neck portion 35 of the tubular hollow sealing portion 40.

A sealing material 28 having an elastically deformable nature or an adhesive nature is provided on an inner surface of the connecting wall 24 of the attaching portion 20 if necessary. This sealing material 28 may be formed by a paste-like caulking material (non-drying sealing compound) onto the inner surface of the connecting wall 24 after the extrusion molding of the weather strip 10, or the sealing material 28 may be formed by co-extruding a foamed rubber material (which is softener and can be more easily deformed than the rubber material forming the peripheral wall 42 of the tubular hollow sealing portion 40) simultaneously with the extrusion of the weather strip 10.

The weather strip 10 of this first embodiment having the above construction is pressed toward the projecting flange portion 7 of the flange 5 formed along the peripheral edge of the door opening in the vehicle body panel 1, so that the projecting flange portion 7 is inserted between the two side walls 22 and 23 of the attaching portion 20. As a result, the interior gripping lips 26 and the exterior gripping lips 27 of the attaching portion 20 grip the projecting flange portion 7 from the both sides thereof, so that the weather strip 10 is attached to the flange 5 of the vehicle body panel 1 (see Figs. 4 to 8).

In this attached condition of the weather strip 10, when the back door 8 is turned about the hinge 9 of the hinge mechanism to be closed in the direction of arrow Q, the back side surface 8a of the back door 8 is first brought into contact with the top portion 45 of the peripheral wall 42 of the tubular hollow sealing portion 40 as indicated by two-dot chain line in Figs. 5 to 8.

Then, the back side surface 8a is brought into contact with that portion of the peripheral wall 42 disposed in the vicinity of the top portion 45 as indicated by solid lines in Figs. 5 to 8, and then the back side surface 8a is brought into contact with the inclined portion 50a of the project portion 50. Therefore, the area of contact of the peripheral wall 42 with the back side surface 8a of the back door 8 gradually increases, and also the elastic repelling force of the peripheral wall 42 gradually increases. Therefore, the peripheral wall 42 is elastically deformed toward the flange 5 while increasing a frictional force between the back side surface 8a of the back door 8 and the contact portion of the peripheral wall 42.

During the time when the back door 8 is subsequently moved to the closed position, the peripheral wall 42 is elastically deformed into a generally flatter shape than the original shape while further increasing the elastic repelling force, and also the contact portion of the peripheral wall 42, while always abutting against the back side surface 8a of the back door 8, the contact portion is displaced along with a locus of movement of the back side surface 8a in such a manner that the back side surface 8a and the contact portion of the peripheral wall 42 are prevented from shifting relative to each other by the increasing frictional force therebetween.

In this first embodiment, the back door 8 is pivotable about the hinge 9 of the hinge mechanism provided at the roof-side upper edge portion of the vehicle body panel 1 between the open and closed positions.

When the back door 8 is closed, the direction of approach of the door relative to the tubular hollow sealing portion 40 is generally the same at the upper portion 10a and lower portions 10b of the weather strip 10 which are disposed generally parallel to the axis of the hinge 9 of the hinge mechanism of the back door 8 as shown in Figs. 5 and 8. Namely, the back side surface 8a of the door 8 is first brought into contact with the portion of the peripheral wall 42 of the tubular hollow sealing portion 40 disposed in the vicinity of the top portion 45 thereof. The contact position of the tubular hollow sealing portion 40, while moving generally along the same locus as the locus of movement of the back door 8, is elastically deformed into a flatter shape than the original shape generally over the entire length of each of the upper portion 10a and the lower portion 10b.

On the other hand, at those portions of the weather strip disposed in intersecting relation to the axis of the hinge 9 of the hinge mechanism, that is, corner portions 10c and opposite (left and right) side portions 10d other than the upper and lower portions 10a and 1Ob the angle of approach of the door relative to the tubular hollow sealing portion 40 is varied depending on the distance from the hinge 9 as shown in Figs. 3, 6 and 7. However, when the back door 8 is moved to the closed position so as to elastically deform the peripheral wall 42 into a flatter shape than the original shape, the back side surface 8a of the back door 8 is first brought into contact with the portion of the peripheral wall 42 disposed in the vicinity of the top portion 45 thereof as is the case with the upper portion 10 and the lower portion 10b, and the contact portion of the peripheral wall 42 is displaced along with the locus of movement of the back side surface 8a in such a manner that the back side surface 8a and the contact portion of the peripheral wall 42 are prevented from shifting relative to each other by the increasing frictional force therebetween.

As a result, even at any of the upper and lower portions 10a and 10b which are disposed nearly parallel to the axis of the hinge 9 of the hinge mechanism of the back door 8, the corner portions 10c and the left and right side portions 10d which intersect the axis of the hinge 9, the tubular hollow sealing portion 40 can be elastically deformed stably over the entire length, thereby securing the good sealing performance.

In the weather strip 10 of this first embodiment, the attaching portion 20 as well as the tubular hollow sealing portion 40 has the uniform cross-sectional shape over the entire length, and therefore the weather strip 10 can be easily formed by extrusion, and can be provided at a low cost.

Furthermore, in this first embodiment, the concave groove 51 of the generally V-shaped acute-angled cross-section is formed between the distal end of the project portion 50 and the outer peripheral surface of the peripheral wall 42. Therefore, water, intruding into a space between the vehicle body outer panel 2 and the back side surface 8a of the back door 8, flows into the concave groove 51 of the generally V-shaped acute-angled cross-section, and the flowing-down of the water is guided by this concave groove 51, thereby preventing an undesirable situation in which the water intrudes past the concave groove 51 into the interior of the vehicle.

Furthermore, in this first embodiment, the peripheral wall 42 includes the interior peripheral wall 43 and the exterior peripheral wall 44, with the root portion of the inclined portion 50a of the project portion 50 lying at the boundary therebetween, and the wall thickness of the interior peripheral wall 43 is larger than the wall thickness of the exterior peripheral wall 44. Therefore, when the peripheral wall 42 of the tubular hollow sealing portion 40 is elastically deformed into the flatter shape than the original shape to be the sealed condition, the interior peripheral wall 43 exerts a larger elastic repulsive force than the exterior peripheral wall 44 because of its increased wall thickness, and therefore the sealing performance can be enhanced by the interior peripheral wall 43.

Furthermore, in this first embodiment, the concave portion 55 is formed at that portion of the inner peripheral surface of the peripheral wall 42 corresponding to the project portion 50. Therefore, that portion of the peripheral wall 42 at which the project portion 50 is formed is not excessively larger in wall thickness than the remaining portion of the peripheral wall 42, and also the elastic repelling force upon deformation will not become excessively large at the localized portion. Therefore, this prevents a situation in which the peripheral wall 42 is prevented by the project portion 50 from being suitably elastically deformed.

The present invention is not limited to the above first embodiment.

For example, although the above first embodiment is directed to the weather strip 10 for use with the back door 8 of the vehicle having the hinge 9 provided at the upper portion thereof, the invention can be applied also to a back door which has a hinge provided at a side portion thereof, and can be opened in a lateral direction.

## Claims

1. A weather strip (10) to seal a gap between a vehicle body panel (1) including a flange (5) disposed at a peripheral edge of a door opening thereof and a door (8), the weather strip comprising:
an attaching portion (20) that has a generally U-shaped cross-sectional shape, the attaching portion including:
two side walls including interior and exterior side walls (22, 23) that face with each other with a predetermined distance therebetween and are attachable to the flange (5) while gripping the flange from opposite sides thereof; and
a connecting wall (24) that integrally connects the two side walls at one end thereof;
a tubular hollow sealing portion (40) that projects from a surface of the connecting wall (24) generally in the same direction as a projecting direction of the flange, the tubular hollow sealing portion including a peripheral wall (42) having a generally annular cross-sectional shape; and
a project portion (50) that projects from the vicinity of a top portion (45) of the peripheral wall and is located at a side of the flange (5) from the top portion, the project portion including:
an inclined portion (50a) that extends along a tangential direction of an outer surface of the peripheral wall; and
a projecting end portion (50b) that projects to an exterior side with respect to the extension line (L) of the flange.

2. A weather strip (10) according to claim 1 for use with a door (8) that is movable between an opened state and a closed state along a locus intersecting an extension line of a projecting direction of the flange, when the door is the closed state;
wherein, when the door is closed, a back side surface (8a) of the door contacts with the top portion (45) of the peripheral wall (42), the vicinity of the top portion (45) of the peripheral wall and the inclined portion (50a) of the project portion, in order, whereby an area of a contact portion of the peripheral wall (42) with the back side surface (8a) of the door increases and an elastic repulsive force of the peripheral wall increases so that the peripheral wall (42) is elastically deformed toward the flange (5) while increasing a frictional force between the back side surface (8a) of the door and the contact portion of the peripheral wall, and
wherein, thereafter, the peripheral wall (42) is elastically deformed into a generally flatter shape than an original shape thereof while increasing the elastic repulsive force, and the contact portion of the peripheral wall is displaced along with the locus of movement of the back side surface (8a) of the door while the back side surface of the door and the contact portion of the peripheral wall (42) are prevented from shifting relative to each other by the frictional force.

3. The weather strip according to claim 1 or 2,
wherein the attaching portion (20) and the tubular hollow sealing portion (40) have uniform cross-sections in a longitudinal direction thereof, respectively.

4. The weather strip according to claim 1, 2 or 3,
wherein the projecting end portion (50b) of the project portion and the outer surface of the peripheral wall (42) defines a groove (51) having a generally V-shape and an acute angle.

5. The weather strip according to any preceding claim,
wherein the peripheral wall (42) includes an interior peripheral wall (43) and an exterior peripheral wall (44) with a root portion (50a) of the project portion (50) as a boundary therebetween,
wherein a thickness of the interior peripheral wall (43) is larger than a thickness of the exterior peripheral wall (44).

6. The weather strip according to any preceding claim,
wherein the peripheral wall includes a concave portion (55) on an inner peripheral surface thereof opposite to a position where the project portion (50) is formed.

7. The weather strip according to any preceding claim,
wherein the tubular hollow sealing portion (40) is made of a sponge rubber and the tubular hollow sealing portion is more easy to be elastically deformed than the attached portion (20), and
wherein the attaching portion (20) is made of rubber material having a higher relative density than that of the sponge rubber.

8. The weather strip according to claim 7,
wherein the weather strip is formed by extrusion, and
wherein the attaching portion (20) and the tubular hollow sealing portion (40) are bonded integrally by co-extrusion and vulcanizing.

9. The weather strip according to any preceding claim,
wherein each of the two side walls (22, 23) includes at least one gripping lip (26, 27) at an inner surface thereof, each gripping lip projecting from the inner surface in a direction away from an opening of the attaching portion (20).

10. The weather strip according to any preceding claim,
wherein the interior side wall (22) is provided with an interior lip (29) that has a generally hook-shaped cross-sectional shape and covers an end edge portion of an interior trim body (60) attached to an inner panel of the vehicle body panel.

11. The weather strip according to any preceding claim,
wherein the exterior side wall (23) is provided with an exterior lip (32) that abuts against an outer surface of an outer panel (2) continuous with a bottom wall (6) of the flange (5).

12. The weather strip according to any preceding claim,
wherein the attached portion (20) includes a core member (21) embedded therein, and
wherein the core member (21) is made of material having higher rigidity than other part of the attaching portion.

13. The weather strip according to any preceding claim,
wherein the connecting wall (24) is provided with a sealing material (28) made of at least one of either paste-like sealing compound and foamed rubber material,
wherein the sealing material close contacts with a distal end of the flange (5) and seals a gap between the connecting wall (24) and the flange when the attaching portion is attached to the flange (5).

14. The weather strip according to any preceding claim used with a door (8) pivotable about a hinge provide to the vehicle body panel at a roof-side upper edge portion thereof.

15. The weather strip according to any preceding claim which has a generally annular shape with longitudinal end portions of the weather strip connected to each other.
